# EUROPEAN PATENT APPLICATION

(11) **EP 4 763 637 A1**
(43) Date of publication of application: **24.06.2026**
(21) Application number: 25225022.0
(22) Date of filing: 18.12.2025
(51) Int. Cl.: B60T 13/22, B60T 13/68, B60T 15/02, B60T 15/20

(54) **CIRCUIT FOR CONTROLLING THE BRAKING OF A VEHICLE**

(30) Priority: 20.12.2024 IT 202400029427
(71) Applicant: SAFIM S.r.l., 41123 Modena (MO) (IT)
(72) Inventor: PARMEGGIANI, Matteo, 41123 Modena (MO) (IT)
(74) Representative: Zoli, Filippo

(57) **Abstract**

The circuit (1) for controlling the braking of a vehicle, comprises: one supply line (2); one drain line (3); one braking line (4); main valve means (5); driving means (6) operating on the main valve means to command the displacement thereof between an unlocking position and a braking position; where the driving means (6) comprise: first elastic means (7) operating on the main valve means; a first driving line (8) operating on the first elastic means; a second driving line (9) communicating with the first driving line and operating on the main valve means from the opposite side of the first driving line itself; second elastic means (11) operating on the main valve means from the opposite side of the first elastic means; a third driving line (12) operating on the main valve means from the opposite side of the first elastic means and connected to the braking line.

## Description

### Technical Field

The present invention relates to a circuit for controlling the braking of a vehicle.

### Background Art

As is known, agricultural or industrial vehicles can be provided with a so-called electrically-operated parking brake.

Current regulations stipulate that "In the event of an electrical failure of the command or a break in the electrical command transmission wiring outside the electronic control unit(s), except for the power supply: it must not be possible to unintentionally activate the parking brake system when the vehicle speed exceeds 10 km/h". This rule stipulates that, in the event of a failure of the electrical system, it must not be possible to accidentally activate the parking brake.

The regulation also stipulates that "it must still be possible to operate the parking brake system from the driver's seat and thus hold the loaded vehicle on an 8% uphill or downhill gradient". This rule specifies that, in the event of a failure of the electrical command outside the control unit, the driver must still be able to manually activate the parking brake and hold the vehicle at a standstill. It is also normally desirable that, in the event of the vehicle being switched off (i.e., in the absence of electrical power to the valve controlling the parking brake), the parking brake should be at the engaged position.

The circuits currently known for controlling a vehicle's parking brake comprise a supply line for a pressurized work fluid, at least one drain line of the work fluid connectable to a draining tank and a braking line connectable to the vehicle's parking brake. Between the supply line and the drain and braking lines there are main valve means movable between an unlocking position, wherein the braking line is set in communication with the supply line to deactivate the parking brake and allow the vehicle to be moved, and a braking position, wherein the braking line is set in communication with the drain line to allow the parking brake to be activated. Driving means are also provided to operate on the main valve means to command the displacement thereof between the unlocking position and the braking position.

In particular, a first solution of known type provides that the driving means of the main valve means are connected to a first solenoid valve communicating with a source of the pressurized work fluid and that there are additional valve means connected in parallel to the main valve means, so that the greater of the pressures exiting between them reaches the braking line. Therefore, if an electrical failure of the first solenoid valve leads to the pressure being reset along the driving means of the main valve means, the braking line continues to be kept under pressure by the second valve means, and consequently the parking brake is deactivated. To activate the parking brake, it is therefore necessary to also deactivate the electrical command of the second valve means, so that the braking line is set in communication with the drain line.

This known solution has some drawbacks.

In particular, modulation of the braking pressure is performed by the combined action of the first solenoid valve and of the main valve means, which is not optimal because during travel (with the brake released) the power supply current to the first solenoid valve is at its maximum and decreases to increase the braking action.

This architecture, in addition to involving constant energy consumption, also has the drawback that at high braking command values it operates in the low current zone of the first solenoid valve, a working zone that tends to be unstable and unreliable due to the comparability between the magnetic force generated by the solenoid and the friction and flow forces due to the construction and operation of the valve itself.

Furthermore, the second valve means do not regulate the pressure coming from the supply line, which must therefore be compatible with the maximum pressure of the parking brake. Therefore, it is often necessary to provide for an additional dedicated supply line with this characteristic.

A second well-known solution involves placing a solenoid valve and a manually-operated valve between the main valve means, the driving means of which are of the electric type, and the braking line. In the event of a failure of the electrical command of the main valve means, it is therefore necessary to command the solenoid valve or the manual valve to drain the braking line and to activate the parking brake.

This solution also has some drawbacks in that it requires the passage through a plurality of solenoid valves arranged in succession to each other and, in order to prevent pressure losses from affecting the responsiveness and modulation of the parking brake, it is necessary to use large-sized valves. For the same reasons described in relation to the first solution mentioned above, this solution also involves a modulation of the braking pressure that is not optimal.

Circuits for controlling the braking of a vehicle are known, e.g., from documents US 11970146B2, US 9421958B2, and EP 3722166A1.

### Description of the Invention

The main aim of the present invention is to devise a circuit for controlling the braking of a vehicle that allows the parking brake and the secondary braking to be optimized with respect to known solutions, in compliance with current regulations in the event of an electrical failure.

Within this aim, one object of the present invention is to achieve a direct proportionality between the control current and the braking intensity, so as to obtain more stable and modulating braking.

Another object of the present invention is to devise a circuit for controlling the braking of a vehicle that allows the aforementioned drawbacks of the prior art to be overcome within the scope of a simple, rational, easy and effective to use, as well as inexpensive solution.

The aforementioned objects are achieved by the present circuit for controlling the braking of a vehicle according to claim 1.

### Brief Description of the Drawings

Other characteristics and advantages of the present invention will become more apparent from the description of a preferred, but not exclusive, embodiment of a circuit for controlling the braking of a vehicle, illustrated by way of an indicative, yet non-limiting example in the accompanying drawings, in which:
Figure 1 is the hydraulic diagram of a circuit for controlling the braking of a vehicle of known type according to the invention, in a first embodiment;
Figure 2 is the hydraulic diagram of a circuit for controlling the braking of a vehicle of known type according to the invention, in a second embodiment;
Figure 3 is the hydraulic diagram of a circuit for controlling the braking of a vehicle of known type according to the invention, in a third embodiment;
Figure 4 is a hydraulic diagram of a circuit for controlling the braking of a vehicle of known type according to the invention, in a fourth embodiment;

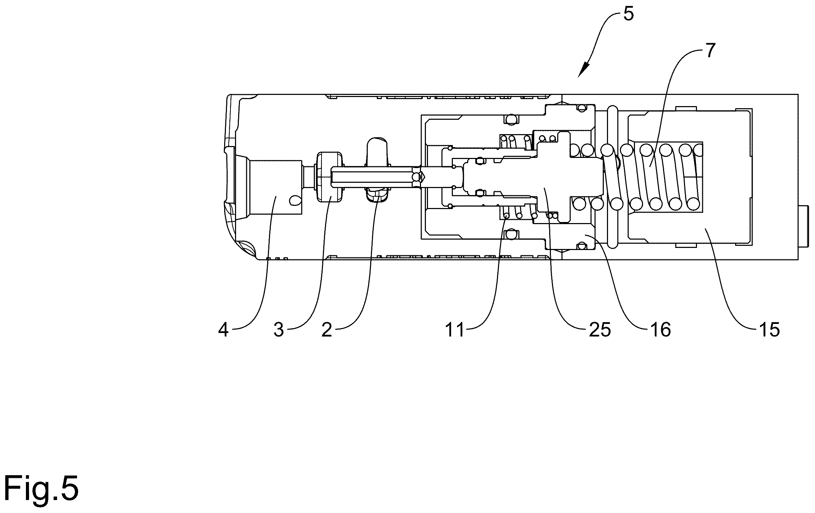

Figure 5 is a section of the main valve means according to the invention.

### Embodiments of the invention

With particular reference to these figures, reference numeral 1 globally denotes a circuit for controlling the braking of a vehicle.

The circuit 1 comprises at least one supply line 2 for a pressurized work fluid, e.g. connectable to a source of pressurized work fluid, at least one drain line 3 of the work fluid connectable to a draining tank T and at least one braking line 4 connectable to the parking brake of a vehicle.

More specifically, the parking brake is of the SAHR type, i.e., it is provided with elastic means communicating with the braking line 4 and adapted to deactivate the parking brake when the braking line is under pressure. When the pressure along the braking line 4 drops to zero, the elastic means return to their home position, activating the parking brake. This brake is often also used to provide secondary braking, i.e., an alternative braking device to the main service brake, which can operate as a backup under emergency conditions or as a modulating brake for certain conditions of use of the machine.

The circuit 1 also comprises main valve means 5 positioned between the supply line 2 and the drain line 3 and the braking line 4. The main valve means 5 are movable between an unlocking position, wherein the braking line 4 is set in communication with the supply line 2 to deactivate the parking brake and allow the vehicle to be moved, and a braking position, wherein the braking line 4 is set in communication with the drain line 3 to allow the parking brake to be activated. Preferably, the main valve means 5 are of the proportional type and therefore allow the pressure of the work fluid which is conveyed to the braking line 4 to be modulated.

The circuit 1 comprises driving means 6 operating on the main valve means 5 to command the displacement thereof between the unlocking position and the braking position.

According to the invention, the driving means 6 comprise:
- first elastic means 7 operating on the main valve means 5 to push them towards the unlocking position;
- a first driving line 8 operating on the first elastic means 7 to increase their preload and push the main valve means 5 towards the unlocking position;
- a second driving line 9 connected to an additional supply line 10 of the pressurized work fluid, communicating with the first driving line 8 and operating on the main valve means 5 from the opposite side of the first driving line itself;
- second elastic means 11 operating on the main valve means 5 from the opposite side of the first elastic means 7, wherein the elastic force of the first elastic means 7 is greater than that of the second elastic means 11; and
- at least a third driving line 12 operating on the main valve means 5 from the opposite side of the first elastic means 7 and connected to the braking line 4.

Depending on the balance of forces operating from opposite sides on the main valve means 5, then they displace towards the unlocking position or towards the braking position.

Appropriately, the supply line 2 and the additional supply line 10 may be separate from each other, as in the embodiments shown in the figures, or they may coincide with each other.

Preferably, the circuit 1 comprises secondary valve means 13 placed between the additional supply line 10 and the second driving line 9. The secondary valve means 13 are movable between at least a first position, wherein the second driving line 9 is set in communication with the drain line 3, and a second position, wherein the second driving line 9 is set in communication with the additional supply line 10.

More specifically, the circuit 1 comprises additional electrically-controlled driving means 14 of the secondary valve means 13, where the additional driving means 14 are activatable to displace the secondary valve means 13 from the first position to the second position. Therefore, as a result of the activation of the additional driving means 14, the second driving line 9 is set in communication with the additional supply line 10, while as a result of the deactivation of the additional driving means 14, the second driving line 9 is set in communication with the drain line 3.

Advantageously, the secondary valve means 13 are of the proportional type, so that as the intensity of the control current of the additional driving means 14 increases, the secondary valve means 13 progressively displace towards the second position so as to increase the pressure of the work fluid along the second driving line 9.

Preferably, the driving means 6 comprise at least one thrust element 15 placed between the first elastic means 7 and the first driving line 8. The thrust element 15 progressively compresses the first elastic means 7 as the pressure along the first driving line 8 increases.

More specifically, the driving means 6 also comprise at least one abutment element 16 adapted to interact with the thrust element 15 during its displacement in the direction of compression of the first elastic means 7 to interrupt the stroke thereof. The abutment element 16 therefore defines the end-of-stroke position of the thrust element 15 during its displacement in the direction of compression of the first elastic means 7. Therefore, the compression of the first elastic means 7 remains unchanged as the pressure along the first driving line 8 increases once the thrust element 15 rests on the abutment element 16.

It follows, therefore, that once the thrust element 15 interacts with the abutment element 16, as the pressure of the work fluid along the second driving line 9 increases, the main valve means 5 progressively displace towards the braking position and, consequently, the braking action exerted by the parking brake progressively increases.

In other words, as a result of the interaction of the thrust element 15 with the abutment element 16, the main valve means 5 continuously modulate the pressure along the braking line 4 according to the pressure of the work fluid present along the second driving line 9, as the thrust exerted from the opposite side by the first elastic means 7 has reached its maximum intensity. More specifically, the main valve means 5 comprise a spool 25 on which the driving lines 8 and 9, the first elastic means 7, and the second elastic means 11 operate. The surface area of the spool 25 facing the first driving line 8 (which involves the actuation of the first elastic means 7) is greater than the reaction area facing the second driving line 9; in this way, a first part of the control current of the additional driving means 14 allows the thrust element 15 to be brought against the abutment element 16, thus reaching the desired pressure for running (brake released) equal to the difference between the force of the first elastic means 7 and the force exerted by the second driving line 9 on the corresponding surface of the spool 25. The next part of the current is used to modulate braking.

More specifically, the fact that the first elastic means 7 are unloaded under a condition of zero driving pressure allows the desired condition of applied brake to be achieved in the absence of electrical power (machine switched off). Whereas, with a driving pressure corresponding to the value that causes maximum compression (thrust element 15 against the abutment element 16), it operates as a pressure regulator for releasing the parking brake and therefore for the running condition.

Advantageously, the circuit 1 comprises safety valve means 17 operationally connected to the main valve means 5. The safety valve means 17 are moved on command from a home position, wherein they maintain the braking line 4 under pressure, and therefore the parking brake deactivated, to an emergency position, wherein they set the braking line 4 in communication with the drain line 3. The home position therefore corresponds to the normal operating condition of the safety valve means 17.

More specifically, as a result of the lack of power supply to the additional driving means 14, the safety valve means 17, when at the home position, maintain the braking line 4 under pressure when the main valve means 5 are at the braking position and, as a result of their activation, they set the braking line 4 in communication with the drain line 3 by means of the main valve means 5 arranged at the braking position.

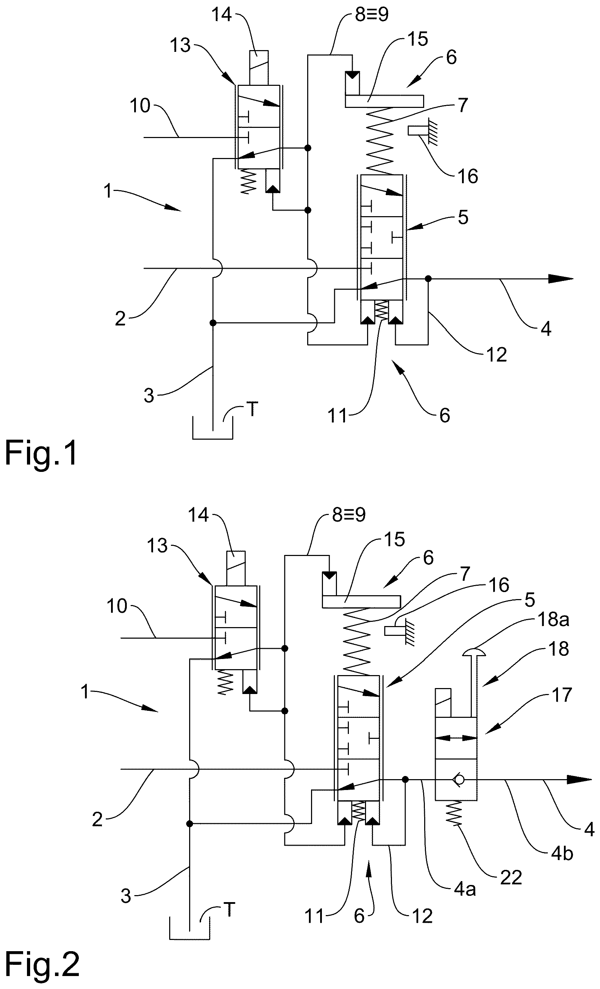

In the second embodiment shown in Figure 2, the first driving line 8 coincides with the second driving line 9. In this embodiment, the safety valve means 17 are arranged along the braking line 4 so as to define a first stretch 4a, placed between the main valve means 5 and the safety valve means 17, and a second stretch 4b arranged downstream of the safety valve means 17 with respect to the way of supply of the work fluid towards the parking brake of the vehicle. In this embodiment, the third driving line 12 communicates with the first stretch 4a and the safety valve means 17, when they are at the home position, allow the flow of the work fluid from the first stretch 4a to the second stretch 4b and prevent the flow of the work fluid in the opposite direction, and when they are at the emergency position, allow the flow of the work fluid from the first stretch 4a to the second stretch 4b and vice versa.

In this way, when the safety valve means 17 are at the home position, the braking line 4 cannot drain the work fluid towards the drain line 3, thus remaining under pressure regardless of the position of the main valve means 5. As a result of the displacement to the emergency position, the work fluid present along the braking line 4 can instead flow towards the drain line 3.

In particular, as a result of the lack of power supply to the additional driving means 14, the secondary valve means 13 displace to the first position and the main valve means 5 displace to the braking position as a result of the pressure along the braking line 4, which pushes on the main valve means 5 through the third driving line 12.

Advantageously, the circuit 1 comprises safety driving means 18 operable to bring the safety valve means 17 from the home position to the emergency position. From the opposite side of the safety driving means 18, there are elastic emergency means 22 operating.

Conveniently, the safety driving means 18 comprise at least one driving element 18a of the manual type. The driving element 18a can therefore be manually operated by an operator in the event of an emergency, i.e., in the event of the parking brake needing to be activated as a result of a power failure affecting the additional driving means 14.

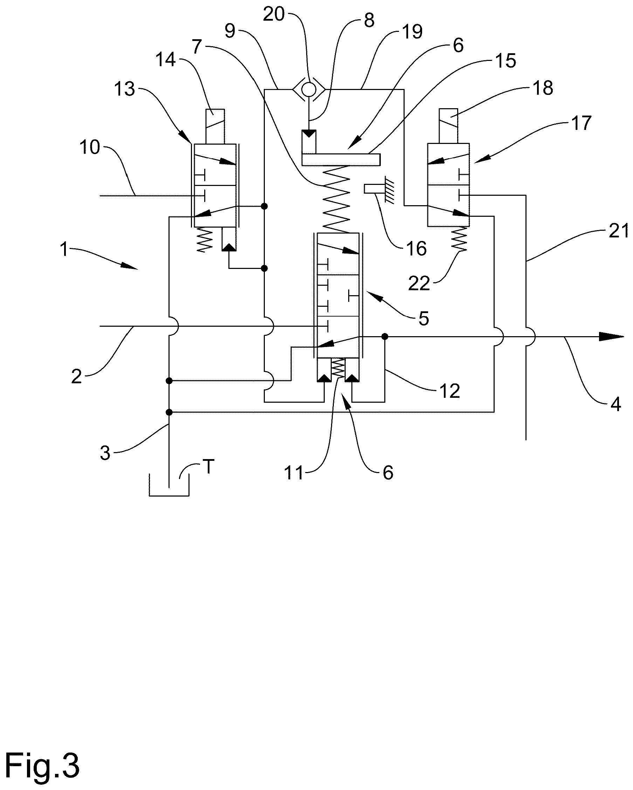

In the third embodiment shown in Figure 3, the circuit 1 comprises a fourth driving line 19 communicating with the first driving line 8, where between the first driving line 8, the second driving line 9 and the fourth driving line 19, selective valve means 20 are placed which are adapted to send, along the first driving line 8 the greater of the pressures present along the second driving line 9 and the fourth driving line 19. The selective valve means 20 are, e.g., of the shuttle valve type. In this embodiment, the circuit 1 also comprises an auxiliary line 21 for the supply of the pressurized work fluid, which can be connected, e.g., to an auxiliary source of pressurized work fluid.

As can be seen from Figure 3, the safety valve means 17 are placed between the fourth driving line 19, the drain line 3 and the auxiliary line 21 and, at the home position, they set the fourth driving line 19 in communication with the auxiliary line 21, while at the emergency position, they set the fourth driving line 19 in communication with the drain line 3. In this case too, there are safety driving means 18, which can be operated to bring the safety valve means 17 to the emergency position when the secondary valve means 13 are at the first position. In this embodiment, the safety driving means 18 are of the electrical type and, under normal operating conditions, are activated to bring the safety valve means 17 to the home position. When it is desired to displace the safety valve means 17 to the emergency position, it is therefore necessary to manually deactivate the safety driving means 18 so that the safety valve means 17 displace as a result of the action of the safety elastic means 22.

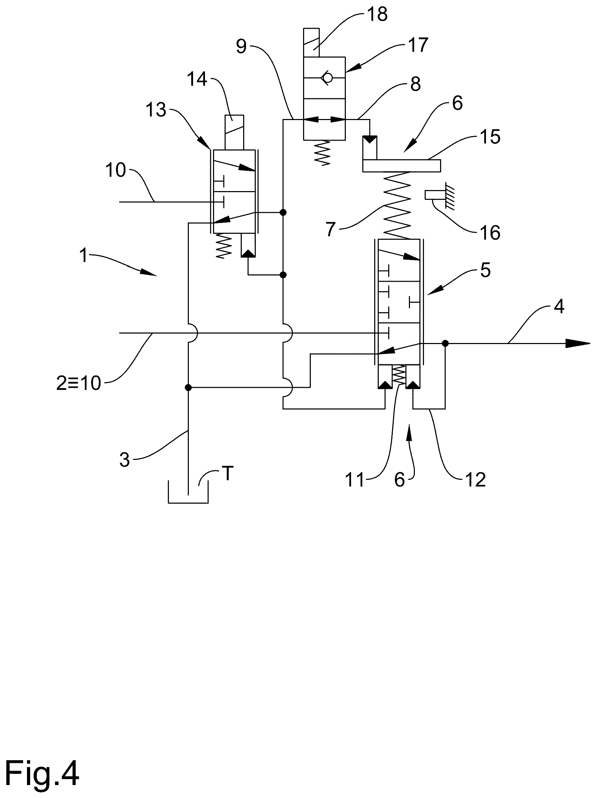

In the fourth embodiment, shown in Figure 4, the safety valve means 17 are placed between the first driving line 8 and the second driving line 9 and, at the home position, they allow the flow of the work fluid from the second driving line 9 towards the first driving line 8 and prevent the work fluid from flowing in the opposite direction while, at the emergency position, they allow the flow of the work fluid from the second driving line 9 towards the first driving line 8 and vice versa. More specifically, at the home position, the safety valve means 17 prevent the pressure along the first driving line 8 from being reduced to zero as a result of the displacement of the secondary valve means 13 being at the first position and, consequently, of the pressure along the second driving line 19 being drop to zero. In this way, the first elastic means 7 remain preloaded, thus preventing the main valve means 5 from displacing to the braking position. In this embodiment too, the safety driving means 18 are of the electrical type and, under normal operating conditions, are activated so as to bring the safety valve means 17 to the home position. When the safety valve means 17 are to be moved to the emergency position, the safety driving means 18 must therefore be manually deactivated so that the safety valve means 17 displace under the action of the safety elastic means 22.

In a further embodiment, not shown in the figures, the safety valve means 17 are placed between the first driving line 8 and the second driving line 9 and, at the home position, they allow the flow of the work fluid from the second driving line 9 towards the first driving line 8 and prevent the work fluid from flowing in the opposite direction, while at the emergency position they allow the flow of the work fluid from the second driving line 9 towards the first driving line 8 and vice versa. In this embodiment, the safety driving means 18 comprise at least one driving element 18a manually activatable to switch from the home position to the emergency position.

It has, in practice, been ascertained that the described invention achieves the intended objects and, in particular, it should be noted that the main valve means are arranged at the braking position both with zero current and with maximum current, and this allows a negative driving architecture to be achieved without the aid of an additional solenoid valve that allows the parking brake to be released under a zero current condition.

Furthermore, the combination of the parameters relating to the load of the first elastic means, to the reaction area of the second driving means and to the reaction area of the third driving means allows the amplitude of the modulation curve to be optimized on a multitude of brake types, using the same type of secondary valve means.

Finally, the combination of the base described with different safety valves allows different control and command logics to be implemented, in compliance with the requirements of the relevant regulations and the machine manufacturer.

## Claims

1. Circuit (1) for controlling the braking of a vehicle, comprising:
- at least one supply line (2) of a pressurized work fluid;
- at least one drain line (3) of the work fluid connectable to a draining tank;
- at least one braking line (4) connectable to the parking brake of a vehicle;
- main valve means (5) of the proportional type, positioned between said supply line (2) and said drain line (3) and braking line (4), wherein said main valve means (5) are movable between an unlocking position wherein said braking line (4) is set in communication with said supply line (2) to deactivate the parking brake and allow the vehicle to be moved, and a braking position, wherein said braking line (4) is set in communication with said drain line (3) to allow the parking brake to be activated;
- driving means (6) operating on said main valve means (5) to command the displacement thereof between said unlocking position and said braking position;
**characterized by** the fact that
said driving means (6) comprise:
- first elastic means (7) operating on said main valve means (5) to push them towards said unlocking position;
- a first driving line (8) operating on said first elastic means (7) to increase their preload and push said main valve means (5) towards said unlocking position;
- a second driving line (9) connected to an additional supply line (10) of the pressurized work fluid, communicating with said first driving line (8) and operating on said main valve means (5) from the opposite side of the first driving line itself;
- second elastic means (11) operating on said main valve means (5) from the opposite side of said first elastic means (7), wherein the elastic force of said first elastic means (7) is greater than that of said second elastic means (11);
- at least a third driving line (12) operating on said main valve means (5) from the opposite side of said first elastic means (7) and connected to said braking line (4).

2. Circuit (1) according to claim 1, **characterized by** the fact that it comprises secondary valve means (13) placed between said additional supply line (10) and said second driving line (9), wherein said secondary valve means (13) are movable between at least a first position, wherein said second driving line (9) is in communication with said drain line (3), and a second position, wherein said second driving line (9) is in communication with said additional supply line (10).

3. Circuit (1) according to claim 2, **characterized by** the fact that it comprises additional electrically-controlled driving means (14) of said secondary valve means (13), said additional driving means (14) being activatable to displace the secondary valve means (13) from the first position to the second position.

4. Circuit (1) according to claim 3, **characterized by** the fact that said secondary valve means (13) are of the proportional type and by the fact that, as the intensity of the control current of said additional driving means (14) increases, the secondary valve means (13) progressively move to the second position so as to increase the pressure of the work fluid along said second driving line (9).

5. Circuit (1) according to one or more of the preceding claims, **characterized by** the fact that said driving means (6) comprise at least one thrust element (15) placed between said first elastic means (7) and said first driving line (8), said thrust element (15) progressively compressing said first elastic means (7) as the pressure along said first driving line (8) increases, and by the fact that it comprises at least one abutment element (16) adapted to interact with said thrust element (15) during its displacement in the direction of compression of said first elastic means (7) to interrupt the stroke thereof, the compression of said first elastic means (7) remaining unchanged as the pressure along said first driving line (8) increases as a result of the interaction of said thrust element (15) with said abutment element (16).

6. Circuit (1) according to one or more of the preceding claims, **characterized by** the fact that it comprises safety valve means (17) operationally connected to said main valve means (5), said safety valve means (17) being movable on command from a home position, wherein they maintain said braking line (4) under pressure, to an emergency position, wherein they set said braking line (4) in communication with said drain line (3) through said main valve means (5), when the latter are at the braking position as a result of the lack of power supply to said additional driving means (14).

7. Circuit (1) according to claim 6, **characterized by** the fact that it comprises safety driving means (18) operable to bring said safety valve means (17) from the home position to the emergency position.

8. Circuit (1) according to claim 6 or 7, **characterized by** the fact that said first driving line (8) coincides with said second driving line (9) and by the fact that said safety valve means (17) are arranged along said braking line (4) so as to define a first stretch (4a), placed between said main valve means (5) and said safety valve means (17), and a second stretch (4b), arranged downstream of said safety valve means (17) with respect to the way of supply of the work fluid towards the parking brake of the vehicle, by the fact that said third driving line (12) communicates with said first stretch (4a), and by the fact that said safety valve means (17) at the home position allow the flow of the work fluid from said first stretch (4a) to said second stretch (4b) and prevent the flow of the work fluid in the opposite direction, and at the emergency position allow the flow of the work fluid from said first stretch (4a) to said second stretch (4b) and vice versa.

9. Circuit (1) according to claim 8, **characterized by** the fact that said safety driving means (18) comprise at least one driving element (18a) of the manual type.

10. Circuit (1) according to claim 6 or 7, **characterized by** the fact that it comprises a fourth driving line (19) communicating with said first driving line (8), where between said first driving line (8), said second driving line (9) and said fourth driving line (19) are placed selective valve means (20) adapted to send, along said first driving line (8), the greater of the pressures present along said second driving line (9) or said fourth driving line (19),
by the fact that it comprises an auxiliary line (21) for the supply of the pressurized work fluid and
by the fact that said safety valve means (17) are placed between said fourth driving line (19) and said drain line (3) and auxiliary line (21), and at the home position they set said fourth driving line (19) in communication with said auxiliary line (21), while at the emergency position they set said fourth driving line (19) in communication with said drain line (3).

11. Circuit (1) according to claim 6 or 7, **characterized by** the fact that said safety valve means (17) are placed between said first driving line (8) and said second driving line (9) and, at the home position, they allow the flow of the work fluid from said second driving line (9) to said first driving line (8) and prevent the flow of the work fluid in the opposite direction while, at the emergency position, they allow the flow of the work fluid from said second driving line (9) to said first driving line (8) and vice versa.

12. Circuit (1) according to claim 10 or 11, **characterized by** the fact that it comprises safety driving means (18) of the electrical type, said safety driving means (18) being de-activatable to bring said safety valve means (17) from the home position to the emergency position.

13. Circuit (1) according to claim 12, **characterized by** the fact that said safety valve means (17) are placed between said first driving line (8) and said second driving line (9), by the fact that said safety valve means (17), at the home position, allow the flow of the work fluid from said second driving line (9) to said first driving line (8) and prevent the flow of the work fluid in the opposite direction and, at the emergency position, allow the flow of the work fluid from said second driving line (9) to said first driving line (8) and vice versa, and by the fact that said safety driving means (18) comprise at least one driving element (18a) manually activatable to switch from the home position to the emergency position.
